# EUROPEAN PATENT APPLICATION

(11) **EP 4 750 022 A1**
(43) Date of publication of application: **27.05.2026**
(21) Application number: 25216469.4
(22) Date of filing: 17.11.2025
(51) Int. Cl.: H04L 43/10, H04L 43/0811, H04L 43/0817, H04L 41/069, H04L 41/082, H04L 41/0853

(54) **MONITORING PORTS TO MAP DEVICES FOR STREAMING MEASUREMENT**

(30) Priority: 22.11.2024 US 202463723701 P; 07.11.2025 US 202519382529
(71) Applicant: The Nielsen Company (US), LLC, New York, NY 10010 (US)
(72) Inventor: KERKES, Joseph, New York, 10010 (US); RYAN, Janice, New York, 10010 (US); PENDER, Jarred Phillip, New York, 10010 (US)
(74) Representative: Anderson, Oliver Ben

(57) **Abstract**

In one example, a method is described. The method includes receiving, from an information presentation device, a sequence of pings. The sequence of pings includes a first ping at a first port number, a second ping at a second port number, and a third ping at a third port number at a streaming meter. The method further includes updating, a system log of the streaming meter, to show the first ping at the first port number, the second ping at the second port number, and the third ping at the third port number; comparing the sequence of pings to a key configuration stored in the streaming meter; and generating, in response to the comparing, a status event. The status event includes device information. The method further includes transmitting, over a network, the status event to a server associated with an audience measurement entity.

## Description

### CROSS-REFERENCE TO RELATED APPLICATION(S)

This disclosure claims priority to U.S. Provisional Patent Application No. 63/723,701, filed November 22, 2024, which is hereby incorporated by reference herein in its entirety.

### BACKGROUND

The present disclosure relates in general to streaming measurement and in particular, to using a particular key sequence to mitigate port spamming while also generating an event for mapping of devices for streaming measurement.

### USAGE AND TERMINOLOGY

In this disclosure, unless otherwise specified and/or unless the particular context clearly dictates otherwise, the terms "a" or "an" mean at least one, and the term "the" means the at least one.

### SUMMARY

In one aspect a method is described. The method includes receiving, from an information presentation device, a sequence of pings, the sequence of pings including a first ping at a first port number, a second ping at a second port number, and a third ping at a third port number at a streaming meter; updating, a system log of the streaming meter, to show the first ping at the first port number, the second ping at the second port number, and the third ping at the third port number; comparing the sequence of pings to a key configuration stored in the streaming meter; generating, in response to the comparing, a status event, the status event including device information; and transmitting, over a network, the status event to a server associated with an audience measurement entity. In one or more aspects, the system log of the streaming meter indicates a closed status for the first port number, the second port number, and the third port number of the streaming meter. In several instances, the method further includes determining, based on the comparing, a match between the key configuration and the sequence of pings. In one or more aspects, the method further includes capturing, based on a determination of the match, the device information from the information presentation device. In various instances, the device information includes at least one of: randomized MAC address, IP address, or device identification number. In several aspects, the first port number, the second port number, and the third port number are closed due to a firewall, and the first port number, the second port number, and the third port number remain in a closed status during the capturing.

In another aspect, a non-transitory computer-readable storage medium, having stored thereon program instructions that, upon execution by a processor, cause performance of operations is described. The operations include receiving, at a streaming meter, a sequence of pings from an information presentation device, the sequence of pings including a first ping at a first port number, a second ping at a second port number, and a third ping at a third port number; and updating, a system log of the streaming meter, to show the first ping at the first port number, the second ping at the second port number, and the third ping at the third port number. The first port number, the second port number, and the third port number are closed to communication via a firewall. The operations further include comparing the sequence of pings to a key configuration stored in the streaming meter; and generating, in response to the comparing, a status event, the status event including device information. In one or more aspects, the operations further include transmitting, over a network, the status event to a server associated with an audience measurement entity. In several aspects, the device information includes at least one of: randomized MAC address, IP address, or device identification number. In one or more instances, the information presentation device is one of: a mobile phone, a laptop, a tablet, a desktop computer, or a television. In several aspects, the operations further include obtaining the key configuration stored in the streaming meter. In one or more aspects, the key configuration includes the first port number, the second port number, and a range of port numbers, including the third port number. In one or more aspects, the comparing includes determining a match between the key configuration and the sequence of ports.

In another aspect, a computing system is described. The computing system includes a processor; and a non-transitory computer-readable storage medium, having stored thereon program instructions that, upon execution by the processor, cause performance of a set of operations including: receiving, from a mobile phone, a sequence of pings at a plurality of ports at a streaming meter; updating, a system log of the streaming meter, to show each ping of the sequence of pings at each respective port of the ports, each respective port being closed; comparing the sequence of pings to a key configuration stored in the streaming meter; and generating, in response to the sequence of pings matching the key configuration, a status event, the status event including device information of the mobile phone. In one or more aspects, the set of operations further include transmitting, over a network, the status event to a server associated with an audience measurement entity. In several aspects, the device information includes at least one of: randomized MAC address, IP address, or device identification number. In one or more instances, the sequence of pings includes at least two pings at two different ports. In several aspects, the sequence of pings includes a first ping at a first port, a second ping at a second port, different than the first port, and a third ping at a third port different than the second port. In various aspects, the key configuration includes the first port, the second port, and the third port. In some instances, the set of operations further includes: capturing, in response to the comparing, the device information of the mobile phone, and the ports remain closed at the streaming meter.

### BRIEF DESCRIPTION OF THE DRAWINGS

**FIG. 1** is a diagrammatic illustration of an example media exposure environment in communication with an example collections facility disclosed herein in accordance with one or more aspects.
**FIG. 2** is a simplified block diagram of an example computing device in accordance with one or more aspects.
**FIG. 3** is a simplified block diagram of an example system in accordance with one or more aspects.
**FIG. 4** is a flow chart of an example method in accordance with one or more aspects.
**FIG. 5** is a flow chart of an example method in accordance with one or more aspects.
**FIG. 6** is a flow chart of an example method in accordance with one or more aspects.

### DETAILED DESCRIPTION

### I. Overview

The number of podcasts, television shows, movies, and other media content is ever increasing, and as this number grows, determining what a user is watching becomes more and more difficult. Additionally, the means by which the user consumes media is also increasing (e.g., televisions, phones, laptops, computers, cellular devices, tablets). Meters can be used to collect information about what the user is watching. For example, meters can capture audio codes known as watermarks, audio snippets referred to as signatures, and/or obtain Internet Protocol ("IP") traffic (e.g., as a streaming meter). These meters can be installed by the user and/or technicians of an Audience Measurement Entity, referred to herein as "AME". When the meters are installed, a first group of devices can be mapped to the user, so as to indicate that the devices are associated with that user. However, over time, the number and types of devices that the user has can change, as can the number of users. For example, the user can get a new cellular device or television, get a new roommate who has a laptop and a cellular device, have a roommate with devices who is not present for the meter installation, and the like. Several examples are described herein for advantageously using meters, such as streaming meters, to map devices for crediting media content by AMEs.

Streaming meters can take the form of a device, separate from a modem or router on a local area network of a monitored environment, that is coupled to the local area network and monitors network traffic to collect media exposure data for streaming media presented in the monitored environment by an information presentation device. The information presentation device is a device that is connected to a home network (e.g., local area network) and configured to access streaming media via the Internet, such as by way of a streaming media application installed on that device, and configured to present the streaming media.

Several examples are described herein for advantageously capturing device information from the information presentation device of the user by the streaming meter. The device information can be used to generate a status event to map the information presentation device for streaming measurement. For example, when the user streams media content on her information presentation device (such as a cellular device), the cellular device can attempt to communicate with the streaming meter. The cellular device pings a plurality of ports of the streaming meter over a period of time. The plurality of ports are ports such as Transmission Control Protocol ("TCP")/ IP ports that are used to transmit data between the cellular device and the streaming meter. When the cellular device pings the streaming meter using a particular key sequence (e.g., a first port pinged, followed by a second port pinged, and followed by a third port pinged) within a range of ports (e.g., a thousand port range or a one hundred port range), device information of the cellular device is captured, despite all ports of the streaming meter being closed due to a firewall. A status event is automatically generated using the device information when the particular key sequence is pinged. The streaming meter transmits the status event, which includes the device information, to a collections facility of the AME. The collections facility (e.g., one or more servers of the collections facility) can update the information presentation devices associated with the household and/or the user based on the device information transmitted in the status event. The collections facility can map the cellular device with the user. For example, the collections facility can associate the cellular device with the IP address and/or MAC address. The collections facility can credit media content that was streamed using the mapped cellular device.

Various examples are described herein for advantageously using a particular key sequence between an information presentation device (such as a laptop) and the streaming meter to mitigate port spamming. Port spamming occurs when some devices probe or ping ports of various devices on the network. Devices can include the information presentation device(s) and/or the streaming meter. Some devices implement firewalls to prevent communication between devices and prevent port spamming. Instead of opening up a port, which creates security concerns, all port probing at the streaming meter is identified as a "failure" between the streaming meter and information presentation device, indicating that no communication between the two devices occurred, or in other words, that the ports are closed. However, if the ports are pinged in accordance with the particular key sequence (e.g., a first port, followed by a second port, and followed by a third port in a certain range of ports), the firewall of the streaming meter detects an attempt to access ports (such as TCP/IP ports) and captures device information of the information presentation device despite having closed ports. When the device information is captured, the streaming meter generates a status event and in response to generating the status event, sends device information to the collections facility so that the collections facility can map the information presentation device to a user, as described herein. The status event can include the port number, the IP address, and the MAC address. However, even when the particular key sequence is implemented, the system log indicates that the information presentation device did not communicate with the streaming meter, which maintains the security of the streaming meter. The various examples also protect the security of the collections facility by only transmitting the generated status event (which includes the device information) to the collections facility.

The operations and systems, described herein, provide techniques for improving audience measurement technology by providing a way to map devices for streaming measurement using a key sequence that also mitigates port spamming thereby, maintaining cybersecurity of the streaming meter and/or the collections facility.

### II. System Architecture

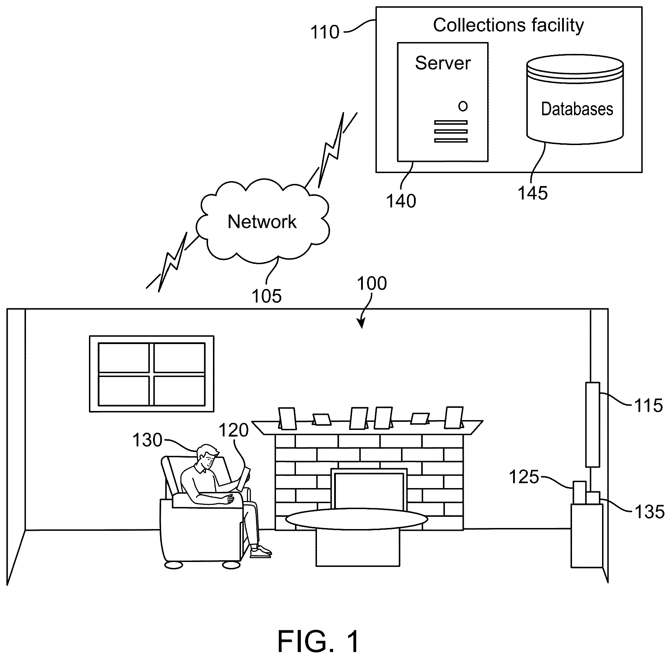

**FIG. 1** is an illustration of an example media exposure environment 100 in communication via network 105 with an example collections facility 110. The media exposure environment 100 includes a media device 115 and a portable media device 120. The media exposure environment 100 includes a streaming meter 125 for collecting audience measurement data of one or more users in a household such as a user 130 based on streaming activity in the media exposure environment 100. The streaming meter 125 is operably coupled to and/or in communication with the router 135. The collections facility 110 includes a server 140 and databases 145. The server 140 is in communication with the databases 145 for crediting media exposure and/or for mapping devices for streaming measurement. The collections facility 110 is remote from the media exposure environment 100 and is associated with the AME.

In the illustrated example of FIG. 1, the media exposure environment 100 is a room of a household (e.g., a room in a home of a panelist of an AME) that has been statistically selected to develop media ratings data for population(s)/demographic(s) of interest. In the illustrated example, one or more persons (such as the user 130) of the household have registered with the AME (e.g., by agreeing to be a panelist) and have provided demographic information to the AME to enable associating demographics with viewing activities (e.g., media exposure) for crediting media.

In one or more aspects, the media exposure environment 100 is a different room in the household than that illustrated by FIG. 1 such as a kitchen or a bedroom. In some aspects, the media exposure environment 100 is a vehicle such as a car or airplane. In some aspects, the media exposure environment 100 can be in a room of a non-statistically selected home, a theater, a tavern, a retail location, an arena, or the like.

In some aspects, the network 105 can be a wired or wireless network. For example, the network 105 can be Bluetooth^{®} network, the Internet, a cellular telephone network, an Ethernet network, any type of service provider network, any other type of wide area network, and/or any type of local area network.

In one or more aspects, the collections facility 110 is in communication with the media exposure environment 100 via the network 105. The collections facility 110 can include one or more servers (e.g., server 140, described herein) remote from the media exposure environment 100 that processes data from meters such as the streaming meter 125. The streaming meter 125 can communicate metering information about streaming activity in the media exposure environment 100 to the collections facility 110.

In several aspects, the media device 115 is a device other than a television capable of streaming such as another information presentation device. An information presentation can include a smart television, radio, a video game console, a tablet, a laptop, a cellular device, a smartphone, a computer, a mobile device, and the like. In some aspects, the media device 115 includes a television and loudspeakers operably associated with the television. The media device 115 can be a device associated with the user 130 and known by the AME to be associated with the user 130. In other aspects, the media device 115 is not known to be associated with the user 130 by the AME and requires mapping of the media device 115 to the user 130. The media device 115 can receive an email to link the device to the streaming meter 125 and/or the collections facility 110 or can download an application that links the media device 115 to the streaming meter 125 and/or the collections facility 110. For example, this email and/or application can associate the media device 115 with the user 130 such as by providing the configuration key sequence (described herein), connecting the media device 115 to a household identifier, associating the media device 115 to a user identifier associated with the user 130, and the like.

In one or more aspects, the portable media device 120 streams media content using the network 105. The portable media device 120 can be an information presentation device such as a tablet, laptop, smartphone, desktop computer, mobile phone, smartphone, and the like. The portable media device 120 can be a new device, such as a device not previously mapped to the user 130 by the AME. In other aspects, the portable media device 120 is known to be associated with the user 130 by the AME and therefore, does not require mapping of the portable media device 120 to the user 130. The portable media device 120 can receive an email to link the device to the streaming meter 125 and/or the collections facility 110 or can download an application that links the portable media device 120 to the streaming meter 125 and/or the collections facility 110. For example, this email and/or application can associate the portable media device 120 with the user 130 such as by providing the configuration key sequence (described herein), connecting the portable media device 120 to a household identifier, associating the portable media device 120 to a user identifier associated with the user 130, and the like.

In at least one aspect, a panel meter (not shown) is in the media exposure environment 100 and is an audience measurement device provided to the user 130 and/or a household associated with the user 130 for collecting and/or analyzing the data from audio signals (for example, audio signals from the media device 115) to be sent to the collections facility 110 for analysis and crediting. The panel meter, in some aspects, is coupled directly to the media device 115. In other aspects, a universal serial bus (USB) dongle is coupled to the media device 115, and the USB dongle wirelessly couples the media device 115 to the panel meter. In some aspects, the panel meter is moveable around the media exposure environment 100 and/or can be positioned in a number of locations around the media exposure environment 100 to detect audio signals from the media device 115. For example, the panel meter can detect watermarks in the audio signals from the media device 115 and/or generate signatures from the audio signals from the media device 115. The panel meter can be a wearable device or a portable meter such as a watch, necklace, headphones, or a device that can be clipped onto the clothes of the user 130 that collects and analyzes media viewed by the user 130. The panel meter can be an application or a website on a media device such as the media device 115 for collecting and/or analyzing media viewed by the user 130.

The streaming meter 125 collects metering information about streaming activity in the media exposure environment 100. In some instances, the streaming meter 125 can be coupled to the router 135 via a wired connection or a wireless connection. Alternatively, the streaming meter is indirectly coupled to the router 135. For example, the streaming meter 125 and the router 135 are both connected to the network 105. The streaming meter 125 can be a network device like a router that has been reprogrammed to perform streaming meter operations, a purpose-built computing device, the router 135 and the streaming meter 125 can be a singular device, or the like. The streaming meter 125 can include a clock component that measures a time (e.g., time between a first ping and a second ping by the portable media device 120).

In one or more aspects, the user 130 is a panelist of the AME. The user 130 can be one panelist in a household of multiple panelists (e.g., a set of parents and two teenage-aged children). In other aspects, the user 130 is not associated with a panel of the AME and is a guest to the media exposure environment 100. In yet other aspects, additional persons (not shown) are located within the media exposure environment 100.

The router 135 is a wireless router device such as a Cisco^{®} router, a TP-Link^{®} router, a NETGEAR^{®} router, and the like. The router 135 can be any other type of network device that wirelessly couples devices (such as the media device 115 and/or the portable media device 120) to a network such as, for example, the network 105, an access point, a modem, etc. The router 135 is configured to create a local network, control access to devices on the network, and route TCP/IP traffic. The router 135 is also configured to assign IP addresses (such IPv4 or IPv6).

In some aspects, the server 140 can be a single server or a plurality of servers. The plurality of servers can be located in a plurality of locations remote from the media exposure environment 100. The server 140 can be a central processor system that is in communication with the databases 145. The server 140 can have a rules-based engine to determine which database of the databases 145 to access.

In various aspects, the databases 145 can store information sent from the streaming meter 125 and/or the panel meter. The databases 145 can be a singular database or a plurality of databases. The databases 145 can include a mapped device table. The mapped device table can map one or more devices to one or more persons (or panelists), respectively. For example, the databases 145 can store device information such as one or more of: randomized MAC addresses, device identification numbers, port numbers, or device type information (such as operating systems) and associate the information with a particular person such as the user 130 in the mapped device table. The databases 145 can update the mapped device table based on device information sent via the network 105 from the streaming meter 125 about the media device 115 and/or the portable media device 120. In some instances, when the streaming meter 125 is installed at the household of the user 130, an initial mapped device table is input by a technician or the user 130 to map all devices that the user 130 and her household currently have. The initial mapped device table is then stored at the databases 145. However, when a new device enters the household such as when the user 130 gets a new phone, the mapped device table in the databases 145 are updated using the device information sent by the streaming meter 125. The databases 145 can also store demographic information about the users such as the user 130 and media content information (such as signatures and watermark information) to identify media content. The databases 145 can be used to determine what media content was presented, who watched the media content, what the demographics of the person who watched the media content, and then credit the media content as being presented to a particular demographic.

In operation, in one or more aspects, the user 130 streams a television program on the portable media device 120 over a network such as the network 105 provided by the router 135. The router 135 is operably coupled to the streaming meter 125. The streaming meter 125 collects information about the portable media device 120 that is streaming the television program. The portable media device 120 pings a plurality of ports of the streaming meter 125 (described herein). When the correct sequence of ports is pinged by the portable media device 120, the streaming meter 125 captures device information associated with the portable media device 120 and generates a status event. The streaming meter 125 sends the status event which includes the device information about the portable media device 120 to the collections facility 110 via the network 105. The device information sent can include one or more port numbers pinged, the Internet Protocol ("IP") address, media access control ("MAC") address of the client device, a device identification number, and the like. The MAC address sent has been randomized. The server 140 of the collections facility 110 determines if the device information of the portable media device 120 is stored in the databases 145. The server 140 updates the databases 145 to store the device information of the portable media device 120. The server 140 can associate the portable media device 120 to a particular household, user, and the like and store that association in the databases 145. The television show can be credited after associating the portable media device 120 and the user 130.

In some aspects, the media device 115 is mapped to the user 130 or a user identification number instead of the portable media device 120. In other aspects, an additional information presentation device is mapped to the user 130, or an additional user in the household, or user(s) of additional households.

In one or more aspects, the streaming meter 125 captures information of information presentation devices such as the portable media device 120 when the portable media device 120 pings one or more ports of the streaming meter 125 and hits the firewall of the streaming meter 125. Each ping can be recorded in systems log of the firewall of the streaming meter 125. The systems log can include port pinged, IP address, MAC address, timestamp, and the like. When the correct sequence of ports is pinged by the portable media device 120, the streaming meter 125 collects the information from the systems log of the firewall and generates a status event to be sent to the collections facility 110 for mapping.

Any one or more of the components described herein can take the form of a computing device, or a computing system that includes one or more computing devices.

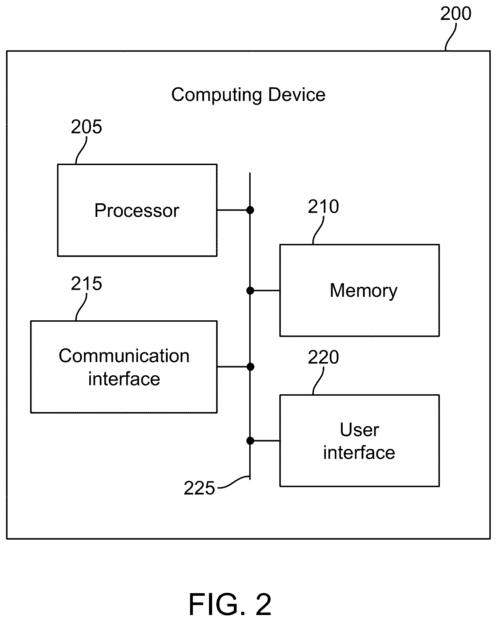

**FIG. 2** is a simplified block diagram of an example computing device 200. The computing device 200 can be configured to perform one or more operations, such as the operations described in this disclosure. As shown, the computing device 200 can include various components, such as a processor 205, memory 210, a communication interface 215, and/or a user interface 220. These components can be connected to each other (or to another device, system, or other entity) via a connection mechanism 225.

The processor 205 can include one or more general-purpose processors and/or one or more special-purpose processors.

Memory 210 can include one or more volatile, non-volatile, removable, and/or non-removable storage components, such as magnetic, optical, or flash storage, and/or can be integrated in whole or in part with the processor 205. Further, memory 210 can take the form of a non-transitory computer-readable storage medium, having stored thereon computer-readable program instructions (e.g., compiled or non-compiled program logic and/or machine code) that, upon execution by the processor 205, cause the computing device 200 to perform one or more operations, such as those described in this disclosure. The program instructions can define and/or be part of a discrete software application. In some examples, the computing device 200 can execute the program instructions in response to receiving an input (e.g., via the communication interface 215 and/or the user interface 220). Memory 210 can also store other types of data, such as those types described in this disclosure. In some examples, memory 210 can be implemented using a single physical device, while in other examples, memory 210 can be implemented using two or more physical devices.

The communication interface 215 can include one or more wired interfaces (e.g., an Ethernet interface) or one or more wireless interfaces (e.g., a cellular interface, Wi-Fi interface, or Bluetooth^{®} interface). Such interfaces allow the computing device 200 to connect with and/or communicate with another computing device over a computer network (e.g., a home Wi-Fi network, cloud network, or the Internet) and using one or more communication protocols. Any such connection can be a direct connection or an indirect connection, the latter being a connection that passes through and/or traverses one or more entities, such as a router, switcher, server, or other network device. Likewise, in this disclosure, a transmission of data from one computing device to another can be a direct transmission or an indirect transmission.

The user interface 220 can facilitate interaction between computing device 200 and a user of computing device 200, if applicable. As such, the user interface 220 can include input components such as a keyboard, a keypad, a mouse, a touch-sensitive panel, a microphone, and/or a camera, and/or output components such as a display device (which, for example, can be combined with a touch-sensitive panel), a sound speaker, and/or a haptic feedback system. More generally, the user interface 220 can include hardware and/or software components that facilitate interaction between the computing device 200 and the user of the computing device 200.

The connection mechanism 225 can be a cable, system bus, computer network connection, or other form of a wired or wireless connection between components of the computing device 200.

One or more of the components of the computing device 200 can be implemented using hardware (e.g., a digital signal processor (DSP), an application-specific integrated circuit (ASIC), a field-programmable gate array (FPGA), another programmable logic device, or discrete gate or transistor logic), software executed by one or more processors, firmware, or any combination thereof. Moreover, any two or more of the components of the computing device 200 can be combined into a single component, and the function described herein for a single component can be subdivided among multiple components.

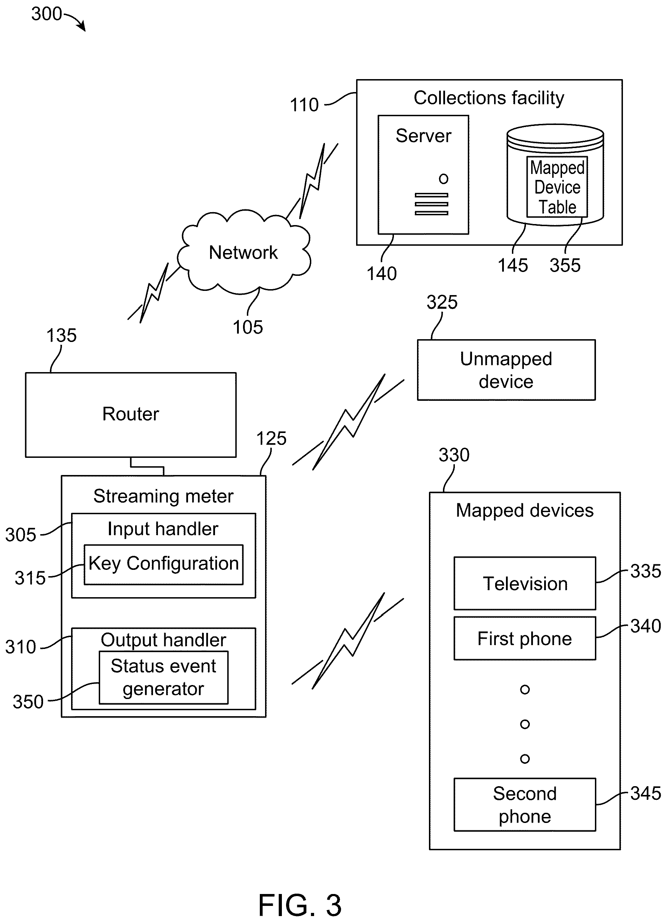

Referring to **FIG. 3****,** with continuing reference to FIGS. 1 and 2, an example streaming measurement system for mapping devices 300 is shown. The streaming measurement system for mapping devices 300 includes the streaming meter 125 operably coupled to and/or in communication with the router 135. The streaming meter 125 includes an input handler 305 and an output handler 310. The input handler 305 includes a key configuration 315. The key configuration 315 is stored in the streaming meter 125 and can be updated periodically by the collections facility 110 via an update (such as a software update). The key configuration 315 is a particular or set key sequence of ports accessed by an unmapped device 325 and/or mapped devices 330 that generates a status event. The mapped devices 330 can include one or more information presentation devices such as, but not limited to a television 335, a first phone 340, and a second phone 345. The streaming meter 125 and/or the router 135 is in communication with the unmapped device 325 and/or the mapped devices 330. The streaming meter 125 and/or the router 135 can be in communication with the unmapped device 325 and/or the mapped devices 330 over a network such as the network 105. The output handler 310 of the streaming meter 125 includes a status event generator 350. The status event generator 350 is configured to generate a status event when the set key sequence of ports is pinged by the unmapped device 325 and/or the mapped devices 330. The streaming meter 125 is in communication with collections facility 110 via the network 105. The streaming meter 125 is configured to transmit the status event to the collections facility 110. The collections facility 110 includes the server 140 and the databases 145. The databases 145 includes a mapped device table 355. The mapped device table 355 includes device information and associated user information corresponding to the device information.

In one or more instances, the streaming meter 125, the router 135, the unmapped device 325, and/or the mapped devices 330 are located in the media exposure environment 100.

In some instances, the streaming meter 125 includes one or more components of the computing device 200 such as memory 210, processor 205, and the like. The streaming meter 125 can physically include the router 135 or be two separate devices.

In one or more aspects, the input handler 305 is implemented using one or more processors, as described herein. The input handler 305 can include a communication interface to communicate with the unmapped device 325 and/or the mapped devices 330. The input handler 305 can include one or more firewalls to detect attempts at accessing one or more ports of the streaming meter 125. The input handler 305 can include one or more systems logs associated with the one or more firewalls to record attempts at accessing one or more ports of the streaming meter 125. The input handler 305 is configured to determine that the TCP/IP ports of the streaming meter 125 were pinged in the correct key sequence using the stored key configuration 315. The input handler 305 is configured to determine and/or capture device information of the unmapped device 325 and/or the mapped devices 330 when the correct key sequence was pinged and/or capture timestamps corresponding to when the ports were pinged. The device information can include the port number(s), IP address, MAC address, and the like. The MAC address can be randomized at the streaming meter 125 for privacy compliance. The MAC address sent to the output handler 310 to be used by the status event generator 350 to generate the status event can be the randomized MAC address. The input handler 305 can monitor a system log from the firewall to capture device information.

In several instances, the output handler 310 is in communication with and/or operably coupled to the input handler 305. The output handler 310 can be implemented using one or more processors, as described herein. The output handler 310 can receive device information from the input handler 305 only when the correct key sequence of ports is pinged. The status event generator 350 can receive the device information and associated timestamps and generate a status event. The output handler 310 and/or the status event generator 350 can communicate with the collections facility 110 via the network 105, transmitting the status event.

In some instances, the key configuration 315 is stored on memory in the streaming meter 125 or accessible by the streaming meter 125. The key configuration 315 can be a plurality of port numbers. For example, the key configuration 315 can be Port X, Port Y, and Port Z. If the unmapped device pings Port Z, Port Y, and Port X, then the key input into the input handler 305 by the unmapped device does not match the stored key configuration 315 stored in the streaming meter 125, except for the second key (Port Y). The key configuration 315 can be at least two port numbers, at least three port numbers, or at least four port numbers in a particular sequence. The key configuration 315 can include port numbers (also referred to herein as "ports") in a certain range. For example, the key configuration can be Port A, Port B, and then Port C, D, or E. The range can be a one hundred port range, a five hundred port range, a thousand port range, or the like. The key configuration 315 can repeat port numbers (except for the last number in the key configuration 315) such as Port B, Port B, Port B, Port B, Port A, Port A, and then any Ports C-G. The ports can be TCP/IP ports. For example, there are over 65,000 TCP ports available and ports can be referred to by a number such as Port 8080 or Port 81. In this disclosure, port numbers are generally referred to by a port and a letter of the alphabet (such as Port Z) for simplicity. The streaming meter 125 can monitor a sub-portion of the TCP port array and the key configuration 315 is a plurality of port numbers within the sub-portion of the TCP port array monitored by the streaming meter 125. The key configuration 315 can be port numbers within a certain range (also referred to herein as the sub-portion of the TCP port array) and that has a particular sequence of ports (first Port A is accessed, then Port B is accessed, and finally Port C is accessed). The key configuration 315 can be set by the AME. The key configuration 315 can be updated periodically (e.g., monthly, quarterly, yearly) via a software update sent from the collections facility 110 over the network 105. The key configuration 315 can also include a time component. For example, the key configuration is Port A is pinged first, then Port B, and then one of: Port X, Port Y, or Port Z, where each ping occurs within 3 seconds of one another.

In various aspects, the unmapped device 325 is a singular information presentation device (e.g., a tablet). In other aspects, the unmapped device 325 is a plurality of devices that are unmapped. The unmapped device 325 could be any information presentation device that streams media content, including, but not limited to: a cellular device, a laptop, a tablet, a television, a mobile phone, and a desktop computer. The unmapped device could include the portable media device 120 and/or the media device 115. The unmapped device 325 is configured to ping ports of the streaming meter. When the unmapped device 325 pings the correct key sequence, the unmapped device 325 is configured to share device information that is used to generate the status event. The device information can include one or more port numbers, an IP address, a device identification number, and a MAC address of the unmapped device 325. While FIG. 3 depicts that unmapped device 325 is unmapped and distinct from the mapped devices 330, the streaming measurement system for mapping devices 300, in some aspects, cannot identify the device as unmapped until its device information of the unmapped device 325 is compared to the mapped device table 355.

In various aspects, the mapped devices 330 can include a singular information presentation device (e.g., a tablet), rather than a plurality of mapped devices. In other aspects, the mapped devices 330 is a plurality of devices that are mapped by the collections facility 110. The mapped devices 330 includes the television 335, the first phone 340, and the second phone 345, as an example of mapped devices 330 for a household, but the mapped devices 330 could be any information presentation device that streams media content, including, but not limited to: a cellular device, a laptop, a tablet, a television, a mobile phone, a gaming console, and a desktop computer that has device information stored with respect to the user and/or household in the mapped device table 355. A mapped device of the mapped devices 330 can include the portable media device 120 and/or the media device 115. The mapped devices 330 are configured to ping ports of the streaming meter. When one mapped device of the mapped devices 330 pings the correct key sequence, the one mapped device is configured to share device information that is used to generate the status event. The device information can include one or more port numbers, an IP address, a device identification number, and a MAC address of the one mapped device. While FIG. 3 depicts that the mapped devices 330 is mapped and distinct from the unmapped devices 325, the streaming measurement system for mapping devices 300, in some aspects, cannot identify the device as mapped until its device information is compared to the mapped device table 355.

In one or more aspects, the status event generator 350 is configured to generate a status event when the key configuration is detected via the firewall of the streaming meter 125. For example, the first phone 340 pings Port C, then Port E, then Port G of the streaming meter 125. The input handler 305 determines that this sequence matches the key configuration 315. The firewall can collect information of the first phone 340 such as IP address, MAC address, port number, and device identification number. The device identification number, in some instances, is the first port pinged minus the third port ping (for example, if port 1000 was pinged, then port 1320, then port 1004, then the device identification number would be 4 for the first phone 340). The status event includes MAC address (which can be a randomized MAC address), IP address, the last port number accessed in the key configuration 315 (which can include a device identification number within the port number, as described above), status event identifier ("software", "map_device", "port _closed", and the like), status event sequence number, and/or a timestamp. The status event generator 350 is configured to occur automatically in response to the streaming meter 125 determining a sequence match with the key configuration 315. The status event generator 350 can add the status event to the systems log of the firewall.

In some instances, the mapped device table 355 is stored in the databases 145 and is accessible to the server 140. The mapped device table 355 can include a plurality of households and a plurality of devices mapped to the respective households. The mapped device table 355 can include a plurality of users and a plurality of devices mapped to respective users. The mapped device table 355 can be initially generated and/or updated when the user 130 joins a panel for the AME, as a part of installation of the meters such as the streaming meter 125. During installation, the user 130 can provide a list of devices (such as information presentation devices) that belong to the user 130, a list of devices that belongs to her roommate, and the like. This initial list can include a device identification number, a device type (such as operating system information), a randomized device identification number, and the like. Additionally, and/or alternatively, the user 130 can receive an email and/or application to each of her devices that links the respective device to the streaming meter 125 or the collections facility 110 and/or provides the configuration key information to the device, so that the respective devices can be mapped. The mapped device table 355 can include a household identification number or a user identification number that is used to maintain privacy of the users such as the user 130. The mapped device table 355 can also include demographic information that corresponds to the users of the one or more devices. The mapped device table 355 can be updated automatically using the system described herein. When the correct key sequence of ports (or port numbers) is pinged by a device, the streaming meter 125 generates automatically a status event by the status event generator 350. The status event is then sent via the network 105 to the collections facility 110 for comparison against the mapped device table 355. In some instances, when the device information included in the status event matches the mapped device table 355, the mapped device table 355 is not updated. In other instances, when the device information included in the status event does not match the mapped device table 355, the device information can be added to the mapped device table 355.

In some aspects, the device information that is newly added includes a counter in the mapped device table. The counter can count when the device information has been sent to the collections facility 110 a threshold number of times. When the threshold number of times has been met, the server 140 associates that the unmapped device 325 is mapped to a particular user number, household number, and/or demographic information in the mapped device table 355.

In operation, in one or more aspects, the first phone 340 of the mapped devices 330 attempts to communicate with the streaming meter 125 via the router 135 over the network 105. The first phone 340 pings the streaming meter 125 at Port Y, Port X, and Port A. A firewall of the streaming meter 125 has Port Y, Port X, and Port A closed. The input handler 305 monitors a system log of the streaming meter 125 and determines that the sequence of Port Y, Port X, and Port A matches the key configuration 315 stored in the streaming meter 125. In response to the determining of a match, the status event generator 350 generates a status event automatically. The status event includes information about the first phone 340 (such as but not limited to: timestamp, device ID, IP address, and/or randomized MAC address). The status event is transmitted via the network 105 to the collections facility 110. The device information stored in the status event is compared to the mapped device table 355 stored in the databases 145, using the server 140. The device information of the first phone 340 is already in the mapped device table 355. The mapped device table is not updated. The unmapped device 325 attempts to communicate with the streaming meter 125 via the router 135 over the network 105. The unmapped device 325 also pings the streaming meter 125 at Port Y, Port X, and Port A. The Port Y, Port X, and Port A remain closed due to the firewall. The input handler 305 monitors the system log of the streaming meter 125 and determines that the sequence of Port Y, Port X, and Port A matches the key configuration 315 stored in the streaming meter 125. In response to the determining of a match, the status event generator 350 generates a status event automatically. The status event generator 350 is controlled by the key sequence input by the unmapped device 325 matching the key configuration 315. The status event includes information about the unmapped device 325 (such as but not limited to: timestamp, device ID, IP address, and/or randomized MAC address). The status event is transmitted via the network 105 to the collections facility 110. The device information stored in the status event is compared to the mapped device table 355 stored in the databases 145, using the server 140. The device information of the unmapped device 325 is not stored in the mapped device table 355. The mapped device table is updated to include device information as the unmapped device 325 in order to map the unmapped device 325.

### III. Example Operations

One or more components of FIGS. 1-3, such as the computing device 200, can be configured to perform and/or can perform one or more operations. Examples of these operations and related features will now be described.

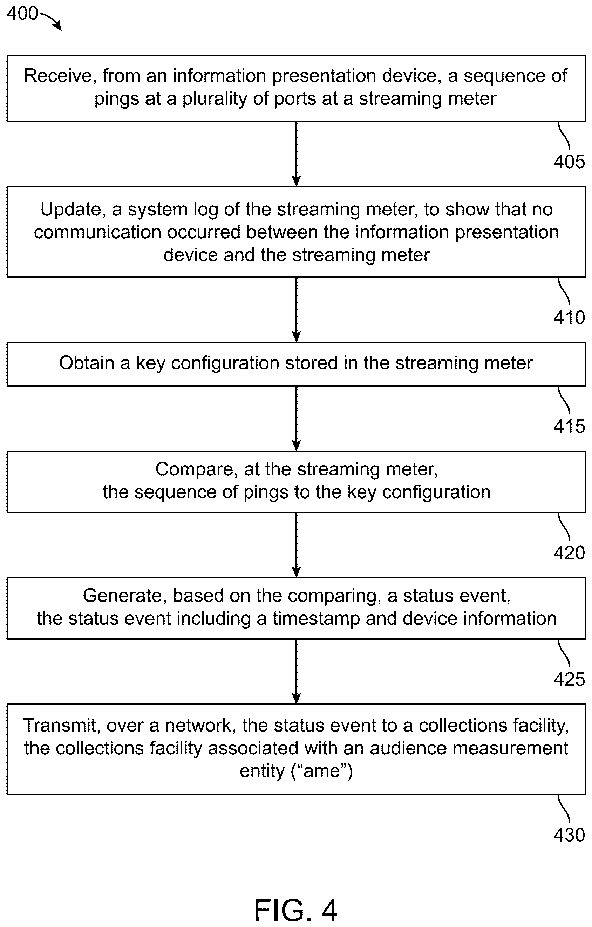

Referring to **FIG. 4****,** with continuing reference to FIGS. 1-3, a method 400 for generating a status event after receipt of a correct sequence of pings is described. Method 400 is illustrated as a set of operations or blocks 405 through 430. Not all of the illustrated blocks 405 through 430 can be performed in all aspects of method 400. One or more blocks that are not expressly illustrated in FIG. 4 can be included before, after, in between, or as part of the blocks 405 through 430. In some aspects, one or more of the blocks 405 through 430 can be implemented, at least in part, by the computing device 200 and/or the streaming measurement system for mapping devices 300, in the form of executable code stored on non-transitory, tangible, machine-readable media that when run by one or more processors can cause the one or more processors to perform one or more of the processes.

In an example aspect, the method 400 includes receiving, from an information presentation device, a sequence of pings at a plurality of ports at a streaming meter at a block 405; updating, a system log of the streaming meter, to show that no communication occurred between the information presentation device and the streaming meter at a block 410; obtaining a key configuration stored in the streaming meter at the block 415; comparing, at the streaming meter, the sequence of pings to the key configuration at a block 420; generating, based on the comparing, a status event including a timestamp and device information at a block 425; and transmitting, over a network, the status event to a collections facility, the collections facility associated with an audience measurement entity ("AME") at a block 430.

In some aspects, an additional block occurs before the block 405. The additional block can include receiving an email with a link to an application associated with the streaming meter (such as the streaming meter 125), downloading an application, registering the information presentation device with the AME, and/or receiving the configuration key sequence required to have the device information captured by the streaming meter. The additional block can include streaming media content on the information presentation device. The information presentation device can include, but not limited to, a tablet, a laptop, a desktop computer, a cellular device, and a television. The additional block can include attempting to communicate, in response to streaming the media content, via one or more pings to a plurality of ports (also referred to herein as "port numbers") of the streaming meter. The streaming meter can be the streaming meter 125. The information presentation device can be the media device 115, the portable media device 120, the unmapped device 325, the mapped devices 330, the television 335, the first phone 340, or the second phone 345.

In several instances, at the block 405, the streaming meter receives an attempt at communication from the information presentation device at one of its ports, identifiable by a specific port number. The attempt at communication can be referred to herein as "a ping". The ping can be used to determine if a connection between the streaming meter and the information presentation device can occur, which allows for transmission of data from the information presentation device to the streaming meter. The streaming meter can include a system log, which records attempts of communications ("pings") from one device (e.g., second phone 345 or a laptop) to the streaming meter (e.g., the streaming meter 125). The system log can record which particular ports were pinged and when (such as including a timestamp). The ports described herein refer to TCP/IP ports. The block 405 can include monitoring a subset of TCP/IP ports for communication attempts from information presentation devices. The sequence of pings can also be referred to as "key sequence", "port sequence," or "port number sequence."

In various aspects, the block 410 can include updating the system log to show that for each port pinged (e.g., Port Z, Port A, and Port E) that no communication occurred and/or connection between the streaming meter and the information presentation device. The block can occur immediately, intermittently, or automatically after the block 405. For example, after a first ping of the sequence of the pings, the system log can be updated to include information associated with the first ping such as which port or port number was attempted to establish communication, a timestamp, and a status such as "no access". The block 410 can occur after each port is pinged or after the sequence of pings at the plurality of ports. The updating can include recording each ping at each port within the subset of TCP/IP ports that are being monitored. The recording can be updating and storing the system log. For example, the system log can include a status for each port pinged such as Port B, attempt at access at 7:10, no connection established; Port Z, attempt at access 7:11, no connection established; Port D, attempt at access 7:12, no connection established; and Port B, attempt at access at 7:13, no connection established. The system log can indicate that each port pinged were respectively closed due to a firewall.

In some instances, the block 415 includes retrieving or obtaining a stored key configuration. The key configuration can be the key configuration 315. The key configuration can be retrieved by the streaming meter 125 and/or the input handler 305. The key configuration can be stored in the streaming meter. The key configuration can be updated via a software update sent from the collections facility. The key configuration can be updated periodically such as, but not limited to: bi-weekly, monthly, quarterly, and yearly. The key configuration is a stored sequence of port numbers. The key configuration can be at least two port numbers, at least three port numbers, or at least four port numbers. The key configuration includes port numbers that are within a certain range of TCP/IP port numbers, so that the streaming meter only monitors pings within that range. The key configuration includes a particular sequence or order of that a device pings the streaming meter. The port numbers can be repeated, except for the last port number in the key configuration. For example, the key configuration could be Port A, Port Y, Port A, and Port Z, in that order. The key configuration can include a time threshold. The time threshold can be stored in the streaming meter. For example, the key configuration could be Port A accessed first, Port B accessed second and within the time threshold (e.g., 2 seconds, 5 seconds, 5 minutes, and the like) and followed by Port C accessed third and within the time threshold. In some instances, the streaming meter 125 includes a clock component to determine if the time threshold is exceeded. The key configuration can also include a range within the sequence of pings. For example, the key configuration can be Port S, Port U, and any one of: Ports A-K.

In various aspects, at the block 420 the sequence of pings stored in the system log of the streaming meter can be compared to the key configuration stored in the streaming meter. In other aspects, as each ping is detected it is determined if it matches the respective key in the key sequence stored in the streaming meter. The block 420 can also include determining a threshold time between two respective pings by the information presentation device and/or if the threshold time is exceeded between two respective pings. For example, if the first ping is for Port A at 10:12 on 1/1/2025 and the second ping is for Port B at 2:13 on 1/3/2025, and the threshold time between a first ping and a second ping is 5 minutes, then even if Port A and Port B matched the key configuration, the comparison would be invalid as the time threshold was exceeded. The block 415 and the block 420 can be combined, in some instances. The block 415 can occur in response to the block 410. Comparing the sequences of pings to the key sequence at the block 415 includes comparing each port number and the order by which each port number was pinged at the streaming meter to the stored key configuration.

In one or more aspects, the block 425 occurs automatically in response to block 420 when comparing the sequence of pings to the key configuration is a complete match. The comparison by the input handler 305 can control the status event generator 350 of the output handler 310 to generate a status event. The block 425 can allow for the streaming meter to capture device information from the information presentation device when the key sequence matches the sequence of pings. In some instances, the device information is captured at the final ping of the sequence. For example, the systems log of the firewall can include information such as the MAC address (which can be randomized before sending to the collections facility), IP address, and port number. The last port number of the key configuration can include a device identification number such as the first key configuration port number minus the last key configuration port number. The systems log can also include a timestamp. The device information (e.g., randomized MAC address, IP address, device identification number, port number, status event, and/or timestamp) can be combined into a status event that can be transmitted at the block 430. To transmit data from the information presentation device to the streaming meter via a port, a connection is established before transmission of data. Firewalls can be used to prevent a connection and prevent transmission of data that could be comprising to the security and integrity of the system such as the streaming meter 125, and systems logs (also referred to as status event logs) can be used to determine if any information is transmitted such that the firewall is breached, if the firewall allows the transmission of data, and if any devices attempted to communicate via one of the ports. At the block 425, the systems log appears that no information passed through the firewall because individually each port was blocking the connection, but after the comparing, if a match is determined, device information of the information presentation device is captured by the streaming meter and sent to the collections facility. This data can be used to generate the status event. The status event can be generated by the status event generator 350. The status event can include at least one of a timestamp, device identification number, IP address, randomized MAC address, household identifier, user identifier, and the like. The block 420 can also randomize any device or personal information required to comply with privacy laws and/or concerns. The status event is generated and output (as described in the block 430) automatically in response to the comparing the sequence of pings to the key configuration being a complete match.

In some aspects, the block 430 occurs automatically after the block 425. The block 430 can be delayed after the block 425. For example, if the streaming meter loses network connection to the server 140 of the collections facility 110, then when the connection is reestablished the status event is transmitted to the collections facility 110 for processing. The block 430 can include outputting a status event and transmitting it over the network to the collections facility 110.

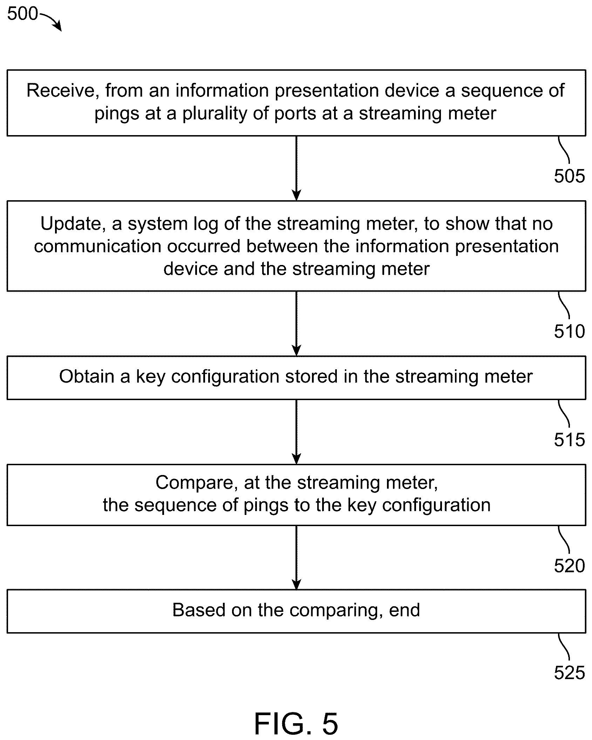

Referring to **FIG. 5****,** with continuing reference to FIGS. 1-3, a method 500 for generating a status event after receipt of an incorrect sequence is described. Method 500 is illustrated as a set of operations or blocks 505 through 525. Not all of the illustrated blocks 505 through 525 can be performed in all aspects of method 500. One or more blocks that are not expressly illustrated in FIG. 5 can be included before, after, in between, or as part of the blocks 505 through 525. In some aspects, one or more of the blocks 505 through 525 can be implemented, at least in part, by the computing device 200 and/or the streaming measurement system for mapping devices 300, in the form of executable code stored on non-transitory, tangible, machine-readable media that when run by one or more processors can cause the one or more processors to perform one or more of the processes.

In an example aspect, the method 500 includes receiving, from an information presentation device, a sequence of pings at a plurality of ports at a streaming meter at a block 505; updating, a system log of the streaming meter, to show that no communication occurred between the information presentation device and the streaming meter at a block 510; obtaining a key configuration stored in the streaming meter at the block 515; comparing, at the streaming meter, the sequence of pings to the key configuration at a block 520; and based on the comparing, end at a block 525.

In one or more aspects, an additional block occurs before the block 505. The additional block includes streaming media content on the information presentation device. The streaming media content includes, but is not limited to: television shows, movies, podcasts, music, and video games. The information presentation device can include, but not limited to, a tablet, a laptop, a desktop computer, a cellular device, and a television. The additional block can include attempting to communicate, in response to streaming the media content, via one or more pings to a plurality of ports (also referred to herein as "port numbers") of the streaming meter. The streaming meter can be the streaming meter 125. The information presentation device can be the media device 115, the portable media device 120, the unmapped device 325, the mapped devices 330, the television 335, the first phone 340, or the second phone 345.

In some aspects, at the block 505, the streaming meter receives an attempt at communication from the information presentation device. The attempt at communication can be referred to herein as "a ping". The ping can be used to determine if the streaming meter can capture any device information about the information presentation device. The block 505 can include monitoring a subset of TCP/IP ports for attempts at communication from information presentation devices. The sequence of pings from the information presentation device to the streaming meter can also be referred to as "key sequence", "port sequence," or "port number sequence."

In several instances, the block 510 can include updating the system log to show that for each port pinged (e.g., Port A, Port B, and Port A) that no communication and/or connection between the streaming meter and the information presentation device occurred. The streaming meter can include a system log, which records attempts of communications ("pings") from one device (e.g., portable media device 120) to the streaming meter (e.g., the streaming meter 125). The system log can record which particular ports were pinged and when (such as including a timestamp). The ports described herein refer to TCP/IP ports. The block can occur immediately, intermittently, or automatically after the block 505. For example, after a first ping of the sequence of the pings, the system log can be updated to include information associated with the first ping such as which port or port number was attempted to establish communication, a timestamp, and a status such as no access. The block 510 can occur after each port is pinged or after the sequence of pings at the plurality of ports. The updating can include recording each ping at each port within the subset of TCP/IP ports that are being monitored. The recording can be updating and storing the system log. For example, the system log can include a status for each port pinged such as Port I, attempt at access at 2:10 on 1/3/2025, no connection established; Port H, attempt at access 7:11 on 1/3/2025, no connection established; and Port C, attempt at access 7:12 on 1/3/2025, no connection established.

In some instances, the block 515 includes retrieving or obtaining a stored key configuration. The key configuration can be the key configuration 315. The key configuration can be retrieved by the streaming meter 125 and/or the input handler 305. The key configuration can be stored in the streaming meter. The key configuration can be updated via a software update sent from the collections facility. The key configuration can be updated periodically such as, but not limited to: bi-weekly, monthly, quarterly, and yearly. The key configuration is a stored sequence of port numbers that correspond to the key that allows for data transmission from the information presentation device to the streaming meter. The key configuration can be at least two port numbers, at least three port numbers, or at least four port numbers. The key configuration includes port numbers that are within a certain range of TCP/IP port numbers. The key configuration includes a particular sequence or order of port numbers that a device pings the streaming meter. The port numbers can be repeated. For example, the key configuration could be Port M, Port N, Port L, and Port M, in that order. The key configuration can include a time threshold. The time threshold can be stored in the streaming meter. For example, the key configuration could be Port X accessed first, Port Y accessed second and within the time threshold (e.g., 2 seconds, 5 seconds, 5 minutes, and the like) and followed by Port Z accessed third and within the time threshold. In some instances, the streaming meter 125 includes a clock component to determine if the time threshold is exceeded.

In various aspects, at the block 520, the sequence of pings stored in the system log can be compared to the key configuration stored in the streaming meter. In other aspects, as each ping is detected it is determined if it matches the respective key in the key sequence stored in the streaming meter. The block 520 can also include determining a threshold time between two respective pings by the information presentation device and/or if the threshold time is exceeded between two respective pings. For example, if the first ping is for Port A at 10:12 on 1/1/2025 and the second ping is for Port B at 2:13 on 1/3/2025, and the threshold time between a first ping and a second ping is 5 minutes, then even if Port A and Port B matched the key configuration, the comparison would be invalid as the time threshold was exceeded and the block 515 would proceed to the block 420. The block 515 and the block 520 can be combined, in some instances. The block 515 can occur in response to the block 510. Comparing the sequences of pings to the key sequence at the block 510 includes comparing each port number, the order by which each port number was pinged, and/or the time between each ping to the stored key configuration.

In various instances, the block 525 occurs in response to the block 520. The block 525 ends the process and/or operations of the method 500. The block 525 occurs when the comparing the sequence of pings to the key configuration does not match and/or does not satisfy the required time threshold. When no match is determined between the sequence of pings and the key configuration, the streaming meter does not generate a status event and/or does not capture device information to be sent to the collections facility 110. The block 525 prevents, stops, or otherwise does not collect or receive data packets or data from the information presentation device since the comparison to the key sequence was not a match. The block 525 can determine that the information presentation device is a device that the meter does not want to map to a user (such as the user 130).

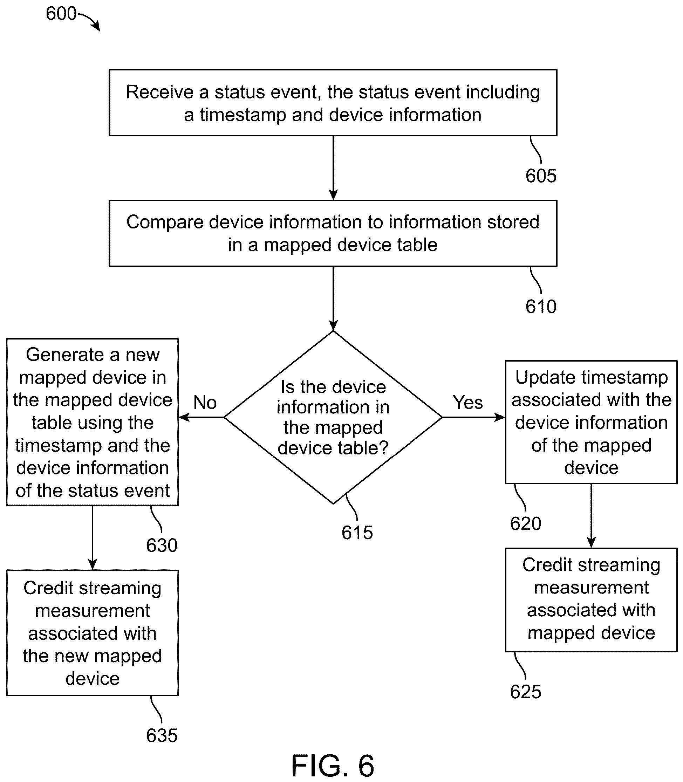

Referring to **FIG. 6****,** with continuing reference to FIGS. 1-4, a method 600 for mapping a device for streaming measurement is described. Method 600 is illustrated as a set of operations or blocks 605 through 635. Not all of the illustrated blocks 605 through 635 can be performed in all aspects of method 600. One or more blocks that are not expressly illustrated in FIG. 6 can be included before, after, in between, or as part of the blocks 605 through 635. In some aspects, one or more of the blocks 605 through 635 can be implemented, at least in part, by the computing device 200 and/or the streaming measurement system for mapping devices 300, in the form of executable code stored on non-transitory, tangible, machine-readable media that when run by one or more processors can cause the one or more processors to perform one or more of the processes.

In an example aspect, the method 600 includes receiving a status event, the status event including a timestamp and device information at a block 605; comparing device information to information stored in a mapped device table at a block 610; determining if the device information is already stored in the mapped device table at the block 615; if so, then updating the timestamp associated with the device information of the mapped device at a block 620 and credit streaming measurement associated with mapped device at the block 625; and if not, then generating a new mapped device in the mapped device table using the timestamp and the device information of the status event at a block 630, and crediting streaming measurement associated with the new mapped device at the block 635.

In some aspects, the block 605 includes receiving a status event transmitted from a streaming meter such as the streaming meter 125. The status event can include a timestamp and/or device information. The device information can include at least one or more of: a device identification number, port number(s) accessed at the streaming meter, a randomized MAC address, IP address, a household identifier associated with the streaming meter, a user identifier associated with a particular user of the household such as the user 130, a port number, a device identification number obtained from the port number, and the like. The device information can be associated with an unmapped device or a mapped device (such as the unmapped device 325 or the mapped devices 330). The status event can be transmitted over the network 105 to the collections facility 110. The timestamp can be a plurality of timestamps such as a timestamp for when each port was accessed in the key sequence. The timestamp can be the timestamp of the last port accessed in the key sequence, which led to device information being shared with the streaming meter.

In one or more instances, the block 610 compares device information to information stored in a mapped device table (e.g., the mapped device table 355). The device information can be compared to information stored in the databases 145. The device information such as, but not limited to, the device identification number and IP address can be compared to the information stored in the mapped device table.

In various aspects, the block 615 determines if the device information is in the mapped device table based on the comparing in the block 610. The block 615 occurs after the block 610. The block 615 can occur automatically and/or in response to the block 610.

In some aspects, the block 620 occurs if the device information is in the mapped device table. The block 620 can include updating any new information associated with the stored information in the mapped device table. For example, the timestamp can be updated at the block 620 for when the steaming meter last received device information. The timestamp can be updated to determine if the device is still in use. The timestamp can be used to determine if a flag should be generated in the mapped device table due to a period of time elapsing that indicates that the device is no longer in use. The mapped device table can remove devices that have not been used for an extended period of time (e.g., when the last timestamp is over 6 months old). In other aspects, the device information is updated if one or more aspects is missing from the table (e.g., an IP address). In yet other aspects, the device information is not updated in the mapped device table, since the device information is already stored in the mapped device table.

In one or more aspects, an additional block occurs after the block 620 that outputs the updated mapped device table.

In several instances, the block 625 credits streaming measurement based on information associated with the mapped device. The information can include what media content was being presented, a device type (e.g., mobile phone, or operating system), and/or the demographics of the person who consumed that media content via streaming. The block 625 includes outputting audience measurement ratings for streaming measurement based on the mapped device.

In various aspects, the block 630 occurs in response to the block 615. The block 620 occurs when the device information is not found after comparing the device information to the information stored in the mapped device table. The block 630 can generate a new entry into the mapped device table. The new entry can include the device information and/or timestamp included in the status event. The block 630 generates a new mapped device in the mapped device table using the timestamp and the device information of the status event. The block 630 can store the new entry as a new mapped device. The new entry can include at least one of: randomized MAC address, IP address, timestamps of when each port in the key sequence was pinged, timestamp of when the last port in the key sequence was pinged, device identification number, household identification number, or user identification number. In some instances, the block 630 uses the server 140 to access the databases 145 to combine other information into the new mapped device entry. For example, the user identification number can be a randomized number associated with the streaming meter 125 to protect the privacy of the user 130, and a database of the databases 145 can store demographic information associated with the user identification number. The demographic information can then be associated with the device identification number in the new mapped device entry. The block 630 can store the new mapped device as an entry into a database of the databases 145 and/or store the new mapped device in the mapped device table 355.

In one or more instances, the block 635 includes crediting streaming measurement based on the information associated with the mapped device. The information can include what media content was being presented, a device type (e.g., laptop), and/or the demographics of the person who consumed that media content via streaming. The block 635 includes outputting audience measurement ratings for streaming measurement based on the newly mapped device.

### IV. Example Feature Combinations

For illustrative purposes only, the disclosure includes the following example feature combinations:
Combination 1. A computing system comprising: a processor, and a non-transitory computer-readable storage medium, having stored thereon program instructions that, upon execution by the processor, cause performance of a set of operations comprising:
   receiving, from a mobile phone, a sequence of pings at a plurality of ports at a streaming meter;
   updating, a system log of the streaming meter, to show each ping of the sequence of pings at each respective port of the ports, wherein each respective port is closed;
   comparing the sequence of pings to a key configuration stored in the streaming meter; and
   generating, in response to the sequence of pings matching the key configuration, a status event, wherein the status event comprises device information of the mobile phone.
Combination 2. The computing system of combination 1, the set of operations further comprising: transmitting, over a network, the status event to a server associated with an audience measurement entity.
Combination 3. The computing system of combination 1, wherein the device information comprises at least one of: a randomized MAC address, an IP address, or a device identification number.
Combination 4. The computing system of combination 1, wherein the sequence of pings comprises at least two pings at two different ports.
Combination 5. The computing system of combination 1, wherein the sequence of pings comprises a first ping at a first port, a second ping at a second port, different than the first port, and a third ping at a third port different than the second port.
Combination 6. The computing system of combination 5, wherein the key configuration comprises the first port, the second port, and the third port.
Combination 7. The computing system of combination 6, the set of operations further comprising: capturing, in response to the comparing, the device information of the mobile phone, and wherein the ports remain closed at the streaming meter.
Combination 8. A non-transitory computer-readable storage medium, having stored thereon program instructions that, upon execution by a processor, cause performance of a set of operations comprising:
   receiving, at a streaming meter, a sequence of pings from an information presentation device, wherein the sequence of pings comprises a first ping at a first port number, a second ping at a second port number, and a third ping at a third port number;
   updating, a system log of the streaming meter, to show the first ping at the first port number, the second ping at the second port number, and the third ping at the third port number,
   wherein the first port number, the second port number, and the third port number are closed to communication due to a firewall;
   comparing the sequence of pings to a key configuration stored in the streaming meter; and
   generating, in response to the comparing, a status event, wherein the status event comprises device information.
Combination 9. The non-transitory computer-readable storage medium of combination 8, the set of operations further comprising: transmitting, over a network, the status event to a server associated with an audience measurement entity.
Combination 10. The non-transitory computer-readable storage medium of combination 8, wherein the device information comprises at least one of: a randomized MAC address, an IP address, or a device identification number.
Combination 11. The non-transitory computer-readable storage medium of combination 8, wherein the information presentation device is one of: a mobile phone, a laptop, a tablet, a desktop computer, or a television.
Combination 12. The non-transitory computer-readable storage medium of combination 8, the set of operations further comprising: obtaining the key configuration stored in the streaming meter.
Combination 13. The non-transitory computer-readable storage medium of combination 12, wherein the key configuration comprises the first port number, the second port number, and a range of port numbers, including the third port number.
Combination 14. The non-transitory computer-readable storage medium of combination 13, wherein the comparing comprises determining a match between the key configuration and the sequence of ports.
Combination 15. A method comprising:
   receiving, from an information presentation device, a sequence of pings, wherein the sequence of pings comprises a first ping at a first port number, a second ping at a second port number, and a third ping at a third port number at a streaming meter;
   updating, a system log of the streaming meter, to show the first ping at the first port number, the second ping at the second port number, and the third ping at the third port number;
   comparing the sequence of pings to a key configuration stored in the streaming meter;
   generating, in response to the comparing, a status event, wherein the status event comprises device information; and
   transmitting, over a network, the status event to a server associated with an audience measurement entity.
Combination 16. The method of combination 15, wherein the system log of the streaming meter indicates a closed status for the first port number, the second port number, and the third port number of the streaming meter.
Combination 17. The method of combination 15, further comprising: determining, based on the comparing, a match between the key configuration and the sequence of pings.
Combination 18. The method of combination 17, further comprising: capturing, based on a determination of the match, the device information from the information presentation device.
Combination 19. The method of combination 18, wherein the device information includes at least one of: a randomized MAC address, an IP address, or a device identification number.
Combination 20. The method of combination 18, wherein the first port number, the second port number, and the third port number are closed due to a firewall, and wherein the first port number, the second port number, and the third port number remain in a closed status during the capturing.

### V. Example Variations

Although the examples, features and combinations described above have been described in connection with specific entities and specific operations, in some scenarios, there can be many instances of these entities and many instances of these operations being performed, perhaps contemporaneously or simultaneously, on a large-scale basis.

In addition, although some of the operations described in this disclosure have been described as being performed by a particular entity, the operations can be performed by any entity, such as the other entities described in this disclosure. Further, although the operations have been recited in a particular order and/or in connection with example temporal language, the operations need not be performed in the order recited and need not be performed in accordance with any particular temporal restrictions. However, in some instances, it can be desired to perform one or more of the operations in the order recited, in another order, and/or in a manner where at least some of the operations are performed contemporaneously/simultaneously. Likewise, in some instances, it can be desired to perform one or more of the operations in accordance with one more or the recited temporal restrictions or with other timing restrictions. Further, each of the described operations can be performed responsive to performance of one or more of the other described operations. Also, not all of the operations need to be performed to achieve one or more of the benefits provided by the disclosure, and therefore not all of the operations are required.

Although certain variations have been described in connection with one or more examples of this disclosure, these variations can also be applied to some or all of the other examples of this disclosure as well and therefore aspects of this disclosure can be combined and/or arranged in many ways. The examples described in this disclosure were selected at least in part because they help explain the practical application of the various described features.

Also, although select examples of this disclosure have been described, alterations and permutations of these examples will be apparent to those of ordinary skill in the art. Other changes, substitutions, and/or alterations are also possible without departing from the invention in its broader aspects as set forth in the following claims.

## Claims

1. A computer-implemented method comprising:
receiving, from a mobile phone, a sequence of pings at a plurality of ports at a streaming meter;
updating a system log of the streaming meter to show each ping of the sequence of pings
at each respective port of the ports,
wherein each respective port is closed;
comparing the sequence of pings to a key configuration stored in the streaming meter; and
generating, in response to the sequence of pings matching the key configuration, a status event, wherein the status event comprises device information of the mobile phone.

2. The computer-implemented method of claim 1, further comprising:
transmitting, over a network, the status event to a server associated with an audience measurement entity.

3. The computer-implemented method of claim 1 or claim 2, wherein the device information comprises at least one of: a randomized MAC address, an IP address, or a device identification number.

4. The computer-implemented method of any preceding claim, wherein the sequence of pings comprises at least two pings at two different ports.

5. The computer-implemented method of any preceding claim, wherein the sequence of pings comprises a first ping at a first port, a second ping at a second port, different than the first port, and a third ping at a third port different than the second port.

6. The computer-implemented method of claim 5, wherein the key configuration comprises the first port, the second port, and the third port.

7. The computer-implemented method of claim 6, further comprising:
capturing, in response to the comparing, the device information of the mobile phone, and wherein the ports remain closed at the streaming meter.

8. The computer-implemented method of any of claims 1 to 4,
wherein the sequence of pings comprises a first ping at a first port number, a second ping at a second port number and a third ping at a third port number, and
wherein the key configuration comprises the first port number, the second port number, and a range of port numbers, including the third port number.

9. The computer-implemented method of claim 8,
wherein the comparing comprises determining a match between the key configuration and the sequence of ports.

10. The computer-implemented method of any preceding claim, wherein each respective port is closed to communication due to a firewall.

11. The computer-implemented method of any preceding claim, wherein the system log of the streaming meter indicates a closed status for the port numbers of each respective port of the ports.

12. The computer-implemented method of any preceding claim, further comprising:
capturing, based on a determination of the sequence of pings matching the key configuration, the device information from the mobile phone.

13. The computer-implemented method of claim 12, wherein the ports remain closed during the capturing.

14. A computing system comprising: a processor, and a non-transitory computer-readable storage medium, having stored thereon program instructions that, upon execution by the processor, cause performance of the method of any preceding claim.

15. A non-transitory computer-readable storage medium, having stored thereon program instructions that, upon execution by a processor, cause performance of the method of any one of claims 1 to 13.
